# EUROPÄISCHE PATENTANMELDUNG

(11) **EP 3 903 562 A1**
(43) Veröffentlichungstag der Anmeldung: **03.11.2021**
(21) Anmeldenummer: 21170992.8
(22) Anmeldetag: 28.04.2021
(51) Int. Cl.: A01F 15/08

(54) **BINDEVORRICHTUNG FÜR EINE LANDWIRTSCHAFTLICHE ERNTEGUTPRESSE UND LANDWIRTSCHAFTLICHE ERNTEGUTPRESSE MIT EINER SOLCHEN BINDEVORRICHTUNG**

(30) Priorität: 29.04.2020 DE 102020002578
(71) Anmelder: Maschinenfabrik Bernard Krone GmbH & Co. KG, 48480 Spelle (DE)
(72) Erfinder: Meiners, Michael, 48480 Schapen (DE)

(57) **Zusammenfassung**

Die vorliegende Erfindung betrifft eine Bindevorrichtung für eine landwirtschaftliche Erntegutpresse, mit einer Antriebseinheit zum Antreiben des Bindevorrichtunges, und mit einer Arbeitseinheit zum Verarbeiten von Erntegut, die von einem angekuppelten Zustand, in dem sie an die Antriebseinheit angekuppelt ist, so dass sie angetrieben ist, in einen ungekuppelten Zustand umschaltbar ist, in der sie nicht an die Antriebseinheit angekuppelt ist, so dass sie nicht angetrieben ist, wobei die Arbeitseinheit eine Schaltklinke, und die Antriebseinheit eine Kupplungsvorrichtung umfasst, mit der die Arbeitseinheit und die Antriebseinheit wirkverbindbar sind, und wobei die Kupplungsvorrichtung im angekuppelten Zustand der Arbeitseinheit mit der Schaltklinke zusammenwirkt, wobei die Antriebseinheit ein elektromagnetisch wirkendes Schaltmittel aufweist, das reversibel von einem inaktiven Zustand in einen aktiven Zustand umschaltbar ist, und das dazu eingerichtet ist, das Wirkverbinden der Kupplungsvorrichtung mit der Schaltklinke auszulösen oder zu beenden. Die vorliegende Erfindung betrifft weiterhin eine landwirtschaftliche Erntegutpresse, insbesondere eine Quaderballenpresse, mit einer solchen Bindevorrichtung.

## Beschreibung

Die vorliegende Erfindung betrifft eine Bindevorrichtung für eine landwirtschaftliche Erntegutpresse, mit einer Antriebseinheit zum Antreiben der Bindevorrichtung, und mit einer Arbeitseinheit, die von einem angekuppelten Zustand, in dem sie an die Antriebseinheit angekuppelt ist, so dass sie angetrieben ist, in einen ungekuppelten Zustand umschaltbar ist, in der sie nicht an die Antriebseinheit angekuppelt ist, so dass sie nicht angetrieben ist, wobei die Arbeitseinheit eine Schaltklinke, und die Antriebseinheit eine Kupplungsvorrichtung umfasst, mit der die Arbeitseinheit und die Antriebseinheit wirkverbindbar sind, und wobei die Kupplungsvorrichtung im angekuppelten Zustand der Arbeitseinheit mit der Schaltklinke zusammenwirkt. Die vorliegende Erfindung betrifft weiterhin eine landwirtschaftliche Erntegutpresse, insbesondere eine Quaderballenpresse, mit einer solchen Bindevorrichtung.

In Ballenpressen gepresste Erntegutballen werden regelmäßig nach dem Fertigstellen mit einem Bindematerial gebunden, damit sie nicht auseinanderfallen. Dafür werden beispielsweise bandförmige Bindematerialien wie Bänder oder Garne genutzt. Solche Bindematerialien werden in einer Bindevorrichtung zur Verfügung gestellt, die eine Obergarnführung, welche einen Knoter umfasst, sowie eine Untergarnführung aufweist. Nach Fertigstellen des Ballens wird die Untergarnführung zur Obergarnführung geführt und jeweils ein Untergarnfaden mit einem Obergarnfaden verknotet. Als Maß für die Fertigstellung des Ballens wird üblicherweise die Ballenlänge genutzt. Es ist aber auch bekannt, die Bindung des Ballens zeitgesteuert auszulösen.

Das Auslösen des Knotvorgangs wird hydraulisch oder elektrisch angestoßen. Elektrische Lösungen erfordern jedoch hohe Stromaufnahmen, die an die Grenzen der Leistungsfähigkeit des elektrischen Bordnetzes der landwirtschaftlichen Erntegutpresse führen. Oftmals ist es dafür erforderlich, andere Verbraucher der landwirtschaftlichen Erntegutpresse zu diesem Zeitpunkt nicht zu schalten oder zu drosseln.

Mechanische Systeme bieten nicht mehr den gewünschten Komfort heutiger Erntegutpressen und sind zudem sehr verschleißbehaftet, was sich auf die Genauigkeit der Ballenlänge auswirkt.

Oftmals wird bislang zudem für Wartungs- und Einstellarbeiten eine manuell zu betätigende Handauslösung für den Knotvorgang benötigt.

Aufgabe der Erfindung ist es, die oben genannten Nachteile zu vermeiden und eine Bindevorrichtung für eine landwirtschaftliche Erntegutpresse zu schaffen, die den Knotvorgang automatisch, ohne Belastung des elektrischen Bordnetzes der Erntegutpresse und ohne erhöhten Bauteileverschleiß, kostengünstig und bei einer genauen, insbesondere voreingestellten, Ballenlänge zuverlässig durchführt, und bei der zudem eine manuell zu betätigende Handauslösung für Wartungs- und Einstellarbeiten vermieden wird.

Die Aufgabe wird gelöst mit einer Bindevorrichtung mit den Merkmalen des unabhängigen Patentanspruchs 1, und mit einer landwirtschaftlichen Erntegutpresse mit den Merkmalen des unabhängigen Patentanspruchs 14. Vorteilhafte Ausführungsformen sind den abhängigen Ansprüchen entnehmbar.

Dafür wird eine Bindevorrichtung für eine landwirtschaftliche Erntegutpresse geschaffen. Die Bindevorrichtung weist eine Antriebseinheit zum Antreiben der Bindevorrichtung auf. Weiterhin weist sie eine Arbeitseinheit auf, die von einem angekuppelten Zustand, in dem sie an die Antriebseinheit angekuppelt ist, so dass sie angetrieben ist, in einen ungekuppelten Zustand umschaltbar ist, in der sie nicht an die Antriebseinheit angekuppelt ist, so dass sie nicht angetrieben ist. Dabei umfasst die Arbeitseinheit eine Schaltklinke, und die Antriebseinheit eine Kupplungsvorrichtung, mit der die Arbeitseinheit und die Antriebseinheit wirkverbindbar sind. Dafür ist vorgesehen, dass die Kupplungsvorrichtung im angekuppelten Zustand der Arbeitseinheit mit der Schaltklinke zusammenwirkt.

Die Bindevorrichtung zeichnet sich dadurch aus, dass die Antriebseinheit ein elektromagnetisch wirkendes Schaltmittel aufweist, das reversibel von einem inaktiven Zustand in einen aktiven Zustand umschaltbar ist, und das dazu eingerichtet ist, das Wirkverbinden der Kupplungsvorrichtung mit der Schaltklinke auszulösen oder zu beenden.

Das Schaltmittel ermöglicht ein automatisches Durchführen des Knotvorgangs. Aufgrund der elektromagnetischen Betätigung erfolgt diese reibungsfrei und daher ohne Bauteileverschleiß. Zudem kann eine manuelle Handauslösung für Wartungs- und Einstellarbeiten bei dieser Bindevorrichtung entfallen.

Dabei ist es bevorzugt, dass das elektromagnetisch wirkende Schaltmittel im inaktiven Zustand unbestromt, und im aktiven Zustand bestromt ist. Da das Schaltmittel im inaktiven Zustand unbestromt und nur im aktiven Zustand bestromt ist, ist der Stromverbrauch für das Schaltmittel sehr gering. Das Schalten des Kupplungsvorgangs, durch das der Knotvorgang geschaltet wird, führt daher nicht zu einer Überlastung des elektrischen Bordnetzes der Erntegutpresse. Ein Drosseln oder zeitweises Vermeiden des Schaltens anderer Verbraucher kann durch die Nutzung des elektromagnetisch wirkenden Schaltmittels daher vermieden werden.

Das Schaltmittel ist bevorzugt eine elektromagnetisch betätigte Bremse, vorzugsweise eine Federkraftbremse. Bei einer solchen Bremse wird ein Haltemoment gegen die Kraft einer Feder aufgebracht. Das Schaltmittel kann weiterhin auch als elektromagnetisch betätigte Kupplung ausgebildet sein. Die elektromagnetisch betätigte Bremse oder Kupplung benötigt nur einen geringen Bauraum, ist verschleißarm und kann in sehr kurzer Schaltzeit vom inaktiven Zustand in den aktiven Zustand und/oder zurück umgeschaltet werden. Daher ist das Auslösen oder Beenden des Kupplungsvorgangs sehr schnell und zeitlich sehr genau durchführbar.

Dabei ist es besonders bevorzugt, dass das Schaltmittel im unbestromten Zustand sein Haltemoment aufbringt. Dadurch muss es lediglich bestromt werden, um das Ankuppeln und/oder das Abkuppeln der Arbeitseinheit an die Antriebseinheit zu bewirken. In einer ganz besonders bevorzugten Ausführungsform ist das Schaltmittel nur dafür vorgesehen, das Wirkverbinden der Kupplungsvorrichtung mit der Schaltklinke auszulösen. In dieser Ausführungsform wird ein zum Auslösen genutzter Mechanismus unbestromt, das heißt im inaktiven Zustand des Schaltmittels, durch das von diesem aufgebrachte Haltemoment gehalten.

Bevorzugt wirkt das Schaltmittel mit einem Schalthebel zusammen, wobei es den Schalthebel im inaktiven Zustand reib- und/oder formschlüssig in einer Ruheposition hält, und im aktiven Zustand freigibt, so dass der Schalthebel von der Ruheposition in eine Freigabeposition verstellbar ist. Dabei ist es bevorzugt, dass der Schalthebel mit der Kraft eines Vorspannelementes, vorzugsweise mit der Kraft einer Feder, von der Ruheposition in die Freigabeposition verstellbar ist. Das Freigeben des Schalthebels ist so mit äußerst geringem Strombedarf möglich. Für das Ankuppeln und/oder Abkuppeln der Arbeitseinheit wird daher im Betrieb nur sehr wenig Strom benötigt, und der Betrieb der landwirtschaftlichen Erntegutpresse ist somit kostengünstig möglich.

Das Zurückstellen des Schalthebels von der Freigabeposition in die Ruheposition erfolgt dabei weiterhin bevorzugt kurvenbahngesteuert. Dabei wird der Schalthebel gegen die Kraft des Vorspannelementes verstellt. Die Kraft des Vorspannelementes ist dafür bevorzugt kleiner als eine Haltekraft des Schaltmittels. Dies verursacht überhaupt keinen weiteren Stromverbrauch.

Um sicherzustellen, dass die Arbeitseinheit in der Ruheposition des Schalthebels nicht angetrieben wird, hält der Schalthebel in seiner Ruheposition die Schaltklinke bevorzugt in einer Grundposition, in der sie außer Eingriff mit der Kupplungsvorrichtung ist. Bei dieser Ausführungsform ist die Arbeitseinheit in der Ruheposition der Schaltklinke nicht an die Antriebseinheit angekuppelt und daher nicht angetrieben. Weiterhin ist es bevorzugt, dass der Schalthebel in seiner Freigabeposition die Schaltklinke freigibt, so dass die Schaltklinke von der Grundposition in eine Kupplungsposition verstellbar ist, in der sie mit der Kupplungsvorrichtung wirkverbindbar oder wirkverbunden ist. Das Freigeben des Schalthebels, und daher der Schaltklinke, löst daher bei dieser Ausführungsform das Ankuppeln der Arbeitseinheit an die Antriebseinheit aus.

Es ist aber ebenfalls eine Ausführungsform bevorzugt, bei der die Schaltklinke in der Ruheposition des Schalthebels in Eingriff mit der Kupplungsvorrichtung ist, so dass die Arbeitseinheit angetrieben ist. Die Schaltklinke befindet sich dann in der Kupplungsposition. Dabei ist es bevorzugt, dass die Schaltklinke in der Freigabeposition des Schalthebels außer Eingriff mit der Kupplungsvorrichtung ist, so dass die Arbeitseinheit nicht angetrieben ist. Die Schaltklinke befindet sich dann in der Grundposition. Dadurch wird die Arbeitseinheit von der Antriebseinheit abgekuppelt. Sie befindet sich dann im ungekuppelten Zustand und das Antreiben der Arbeitseinheit ist beendet.

Die Kupplungsvorrichtung umfasst dafür bevorzugt eine Kupplungsglocke, die um eine Kupplungsachse drehbar ist, und in der ein Mitnehmer angeordnet ist. Der Mitnehmer gerät in der Kupplungsposition der Schaltklinke beim Drehen der Kupplungsglocke bevorzugt in Anlage an die Schaltklinke. Die Schaltklinke wird dann durch Drehen der Kupplungsglocke angetrieben.

Um die Arbeitseinheit anzutreiben, ist es bevorzugt, dass sie eine Kurbel umfasst, die drehbar um die Kupplungsachse der Kupplungsvorrichtung angeordnet ist, wobei die Schaltklinke um eine Klinkenachse drehbar an der Kurbel befestigt ist. Bei angetriebener Schaltklinke wird die Kurbel daher um die Kupplungsachse gedreht.

In einer bevorzugten Ausführungsform umfasst die Arbeitseinheit zudem eine Schwinge, die an der Kurbel schwenkbar befestigt ist. Die Schwinge ist durch Drehen der Kurbel um die Kupplungsachse hin und zurück verschwenkbar. In der Ausführungsform als Untergarnführung fördert sie dabei den Unterfaden zum Knoter, so dass im Knoter die Herstellung eines Knotens gemeinsam mit dem Oberfaden möglich ist.

Die Arbeitseinheit ist bevorzugt eine Untergarnführung der landwirtschaftlichen Erntegutpresse. Bei Antrieb der Arbeitseinheit wird diese hin und zurück verschwenkt. An der Schwinge befestigte Knoternadeln werden beim hin und zurück Verschwenken der Schwinge mit verschwenkt. Ein durch die Knoternadeln geführter Untergarnfaden kann so zu einem ihm zugeordneten Knoter und dem ihm zugeordneten Obergarnfaden geführt werden, so dass er mit diesem verknotet werden kann. Die Erntegutpresse dieser Ausführungsform ist bevorzugt eine Quaderballenpresse.

Dabei ist es bevorzugt, dass die Bindevorrichtung eine Steuerungseinheit umfasst, die dazu eingerichtet ist, das Schaltmittel in Abhängigkeit von einem Betriebswert umzuschalten. Vorzugsweise ist der Betriebswert ein voreingestellter Wert oder ein Messwert. Besonders bevorzugt wird als Messwert eine gemessene Ballenlänge genutzt. Es ist aber ebenfalls bevorzugt, eine voreingestellte Zeit als Betriebswert zu nutzen, oder eine voreingestellte Ballenlänge.

In einer ebenfalls bevorzugten Ausführungsform ist die Arbeitseinheit eine Netz- oder Bandbindeeinheit. Die Erntegutpresse dieser Ausführungsform ist bevorzugt eine Rundballenpresse. Auch bei dieser Ausführungsform wird das Schaltmittel zum Auslösen der Bindung genutzt. Dabei ist es weiterhin bevorzugt, als Betriebswert zum Umschalten des Schaltmittels einen gemessenen Ballendurchmesser zu nutzen.

Die Aufgabe wird ebenfalls gelöst mit einer landwirtschaftlichen Erntegutpresse, vorzugsweise mit einer Quaderballenpresse, mit einer solchen Bindevorrichtung, oder ebenfalls bevorzugt mit einer Rundballenpresse, mit einer solchen Bindevorrichtung.

Dabei ist es bevorzugt, dass ein Sollwert für den Betriebswert, insbesondere die Ballenlänge oder der Ballendurchmesser des Ballens, an einer Bedieneinheit von einem Bediener der Erntegutpresse einstellbar ist. Vorzugsweise wird der Kupplungsvorgang dann bei Erreichen oder Überschreiten des Sollwerts ausgelöst, oder im nächsten Zyklus. Sofern die landwirtschaftliche Erntegutpresse eine gezogene Erntegutpresse ist, kann eine solche Bedieneinheit zum Eingeben des Sollwerts auch in einer Zugmaschine angeordnet sein, an die die landwirtschaftliche Erntegutpresse angehängt ist. Der Sollwert ist dann an der Bedieneinheit der Zugmaschine einstellbar. Prinzipiell kann als Sollwert auch ein voreingestellter, insbesondere erntegutabhängiger, Wert genutzt werden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine landwirtschaftliche Erntegutpresse mit einer erfindungsgemäßen Bindevorrichtung;
- Fig. 2: in (a) und (c) schematisch eine erfindungsgemäße Bindevorrichtung für die landwirtschaftliche Erntegutpresse der Fig. 1 in verschiedenen perspektivischen Ansichten, und in (b) und (d) jeweils einen vergrößerten Ausschnitt aus den Fig. 2 (a) und (c); und
- Fig. 3: in (a) - (h) jeweils eine Seitenansicht der vergrößerten Ausschnitte der Fig. 2 (b) und (d).

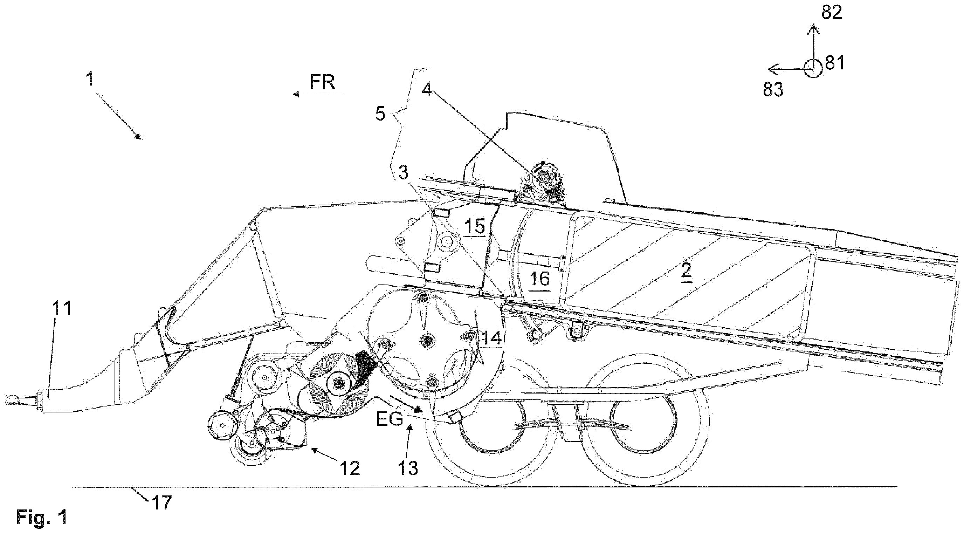

Fig. 1 zeigt schematisch eine landwirtschaftliche Erntegutpresse 1 mit einer erfindungsgemäßen Bindevorrichtung 5. Bei der landwirtschaftlichen Erntegutpresse 1 handelt es sich um eine Quaderballenpresse. Im Folgenden werden die Begriffe landwirtschaftlich Erntegutpresse 1 und Quaderballenpresse synonym verwendet.

Die Erntegutpresse 1 der Fig. 1 ist dazu vorgesehen, von einer Zugmaschine (nicht gezeigt) gezogen zu werden. Sie weist dafür in einer Fahrtrichtung FR vorn eine Anhängerkupplung 11 auf. Die Erfindung ist aber auch auf selbstfahrenden Erntegutpressen anwendbar.

Die Erntegutpresse 1 weist als Aufnahmevorrichtung 12 eine Pick- up zur Aufnahme von Erntegut vom Boden 17 auf. Das Erntegut wird einer Schneidvorrichtung (nicht bezeichnet) zugeführt, die der Aufnahmevorrichtung 12 in einer Gutflussrichtung EG nachgeordnet ist. Nach dem Schneiden wird es einer Förder- und Sammelvorrichtung 13 zugeführt, die zum Sammeln und Vorpressen des Ernteguts vorgesehen ist. Die Förder- und Sammelvorrichtung 13 weist dafür eine Sammelkammer 14 auf. In Gutflussrichtung EG ihr nachgeordnet ist ein Presskanal 16 vorgesehen. Bei ausreichender Vorverdichtung des Erntegutes in der Sammelkammer 14 wird dieses mittels eines als Zubringerrechen (nicht bezeichnet) ausgebildeten Rechens der Förder- und Sammelvorrichtung 13 von der Sammelkammer 14 aus in den Presskanal 16 gefördert. Dort wird es mit einem Presskolben 15, der im Presskanal 16 zyklisch hin und her bewegt wird, zu einem Quaderballen 2 gepresst.

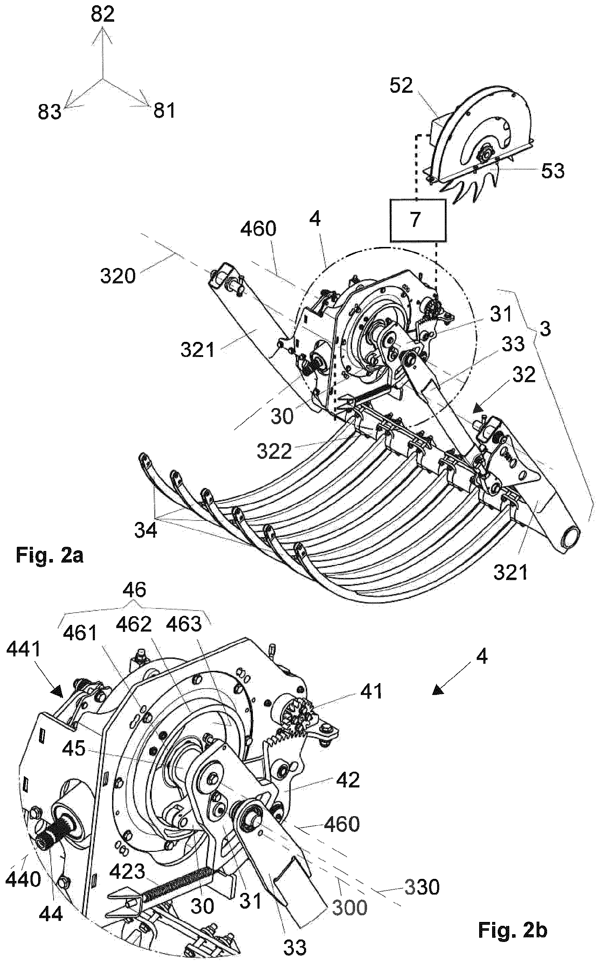

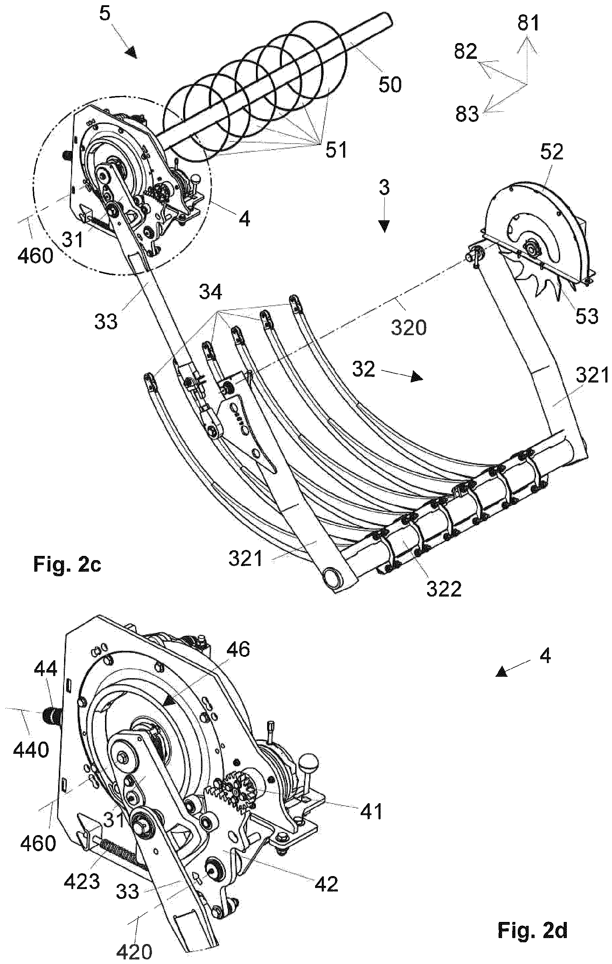

Die Quaderballenpresse 1 umfasst eine Bindevorrichtung 5, die zum Binden des Quaderballens 2 vorgesehen ist, damit dieser nicht mehr auseinanderfällt. Dafür umfasst die Bindevorrichtung 5 eine Vielzahl Knoter 51 (s. Fi. 2(c)), die zum Binden eines Knotens vorgesehen sind. Die Knoter 51 sind jeweils dafür vorgesehen, einen Obergarnfaden (nicht gezeigt) aus dem Bindematerial zu führen. Sie sind oberhalb des Presskanals 16 angeordnet. Weiterhin umfasst die Bindevorrichtung 5 eine Arbeitseinheit 3, die zur Führung von Untergarnfäden (nicht gezeigt) aus dem Bindematerial vorgesehen ist. Die Arbeitseinheit 3 wird im Folgenden daher auch als Untergarnführung bezeichnet. Die Untergarnführung 3 ist unterhalb des Presskanals 16 angeordnet. Sie umfasst für jeden der Knoter 51 jeweils eine Knoternadel 34 (s. Fig. 2), die zum Binden eines Knotens jeweils einen Untergarnfaden zu dem ihm zugeordneten Knoter 51 führen. Dies kann nur in einem Zeitfenster, in dem der im Presskanal 16 zyklisch hin- und her bewegte Presskolben 15 diesen freigibt, erfolgen.

Der Ballen 2 wird gebunden, wenn ein Sollwert für eine Ballenlänge erreicht oder überschritten ist. Alternativ kann der Ballen 2 auch im folgenden Zyklus gebunden werden. Der Sollwert ist vom Bediener an einer Bedieneinheit (nicht gezeigt) einstellbar. Zum Messen der Ballenlänge weist die Quaderballenpresse 1 einen Längensensor 52 (s. Fig. 2 (a) und (c)) auf. Der Längensensor 52 umfasst hier ein Messrad 53, dass beim Verschieben des Ballens 2 im Presskanal in Eingriff 16 mit dem Ballen 2 gerät und sich dann dreht. Aus der Anzahl seiner Umdrehungen wird die Ballenlänge bestimmt.

Wenn die Ballenlänge erreicht ist, muss die Untergarnführung 3 angetrieben werden, so dass die Knoternadeln 34 jeweils zu dem ihnen zugeordneten Knoter 51 geführt werden. Dafür weist die Bindevorrichtung 5 eine Antriebseinheit 4 auf.

Fig. 2 zeigt in (a) und (c) jeweils schematisch die Bindevorrichtung 5 in verschiedenen perspektivischen Ansichten. Die Bindevorrichtung 5 umfasst die Untergarnführung 3, die Antriebseinheit 4 und eine feststehende Knoterwelle 50 (s. Fig. 2 (c)). An der Knoterwelle 50 ist die Vielzahl Knoter 51 angeordnet (s. Fig. 2 (c)). Die Untergarnführung 3 weist für jeden der Knoter 51 jeweils die ihm zugeordnete Knoternadel 34 auf. Die Fig. 2 (b) und (c) zeigen jeweils einen vergrößerten Ausschnitt aus den Fig. 2 (a) und (d).

Die Untergarnführung 3 weist eine Schwinge 32 mit zwei Schwingenarmen 321 auf, die um eine Schwenkachse 320 schwenkbar an Rahmenbauteilen (nicht dargestellt) der Erntegutpresse 1 gelagert sind. An einem der Schwenkachse 320 abgewandten Ende (nicht bezeichnet) sind die Schwingenarme 321 durch eine Nadelwelle 322 miteinander verbunden. Die Schwingenarme 321 und die Nadelwelle 322 sind daher etwa u-förmig zueinander angeordnet. An der Nadelwelle 322 sind die Knoternadeln 34 drehfest befestigt. Dadurch werden die Knoternadeln 34 beim hin- und her Schwenken der Schwinge 32 mit verschwenkt.

Zum Antrieb der Schwinge 32 ist eine Koppel 33 vorgesehen, die an einem Ende (nicht bezeichnet) an einem der Schwingenarme 321, und an einem gegenüberliegenden Ende (nicht bezeichnet) um eine Koppelachse 330 (s. Fig. 2(b)) drehbar an einer Kurbel 31 befestigt ist. Die Kurbel 31 ist drehbar um eine Kupplungsachse 460 einer Kupplungsvorrichtung 46 einer Antriebseinheit 4 gelagert. Die Kupplungsvorrichtung 46 ist zum Ankuppeln der Untergarnführung 3 an die Antriebseinheit 4 vorgesehen. In einem angekuppelten Zustand A der Untergarnführung 3 an die Kupplungsvorrichtung 46 wird die Kurbel 31 gedreht. Beim Drehen der Kurbel 31 um die Kupplungsachse 460 nimmt die Kurbel 31 die Koppel 33 mit. Dadurch wird die Schwinge 32 hin und her verschwenkt.

Die Antriebseinheit 4 weist einen Antrieb 44 auf, der sich in Richtung einer Antriebsachse 440 erstreckt. Im Betrieb der Erntegutpresse 1 wird er von einer Zapfwelle (nicht gezeigt) eines Verteilergetriebes (nicht gezeigt) der Erntegutpresse 1 aus um diese drehend angetrieben. Der Antrieb 44 treibt ein Getriebe 441 an, das hier als Kegelradgetriebe ausgebildet ist. Das Getriebe 441 treibt einen quer und in einer radialer Richtung zum Antrieb 44 räumlich versetzten Abtrieb 45 (s. Fig. 2 (b)) an. Am Abtrieb 45 ist die Kupplungsvorrichtung 46 drehfest befestigt. Der Abtrieb 45 ist drehbar um die Kupplungsachse 460 angeordnet, so dass sich die Kupplungsvorrichtung 46 beim Antreiben des Abtriebs 45 um die Kupplungsachse 460 dreht. Die Kupplungsvorrichtung 46 weist eine Kupplungsglocke 462 auf, mit einem Kupplungsfenster 463 und einem Mitnehmer 461, wobei der Mitnehmer 461 in das Kupplungsfenster 463 hineinragt. Die Kupplungsvorrichtung 46 ist dazu vorgesehen, in einem Kupplungsvorgang die Untergarnführung 3 an die Antriebseinheit 4 anzukuppeln, damit die Untergarnführung 3 angetrieben wird.

Zum Auslösen des Kupplungsvorgangs weist die Antriebseinheit 4 ein Schaltmittel 41 auf. Das Schaltmittel 41 ist hier eine elektromagnetisch betätigte Bremse. Im Folgenden werden daher die Begriffe Schaltmittel 41 und Bremse synonym verwendet. Prinzipiell kann aber auch eine Kupplung als Schaltmittel 41 genutzt werden.

Das Schaltmittel 41 ist von einem aktiven Zustand a, in dem es bestromt ist, in einen inaktiven Zustand i, in dem es unbestromt ist, umschaltbar. Die hier genutzte Bremse 41 bringt ihr Haltemoment im inaktiven, unbestromten Zustand i auf. Es können aber auch elektromagnetisch betätigte Schaltmittel 41 genutzt werden, die ihr Haltemoment im aktiven, bestromten Zustand a aufbringen.

Das Schaltmittel 41 ist dafür vorgesehen, einen Schalthebel 42 im inaktiven, unbestromten Zustand i in einer Ruheposition R zu halten. Der Schalthebel 42 ist um eine Schaltachse 420 drehbar an einem Rahmen (nicht bezeichnet) der Antriebseinheit 4 gelagert. In seiner Ruheposition R hält er eine Schaltklinke 30 der Arbeitseinheit 3, die um eine Klinkenachse 300 drehbar an einer Kurbel 31 der Arbeitseinheit 3 gelagert ist, in einer Grundposition G. Dafür weisen der Schalthebel 42 einen Anschlagarm 422 und die Schaltklinke 30 einen Freigabearm 302 auf, die in der Ruheposition R des Schalthebels 42 und Grundposition G der Schaltklinke 30 aneinander anliegen. Dabei hält das Schaltmittel 41 den Schalthebel 42 in der Ruheposition R gegen die Kraft eines Vorspannelementes 423 und die Schaltklinke 30 in der Grundposition G gegen die Kraft eines Kraftmittels 303.

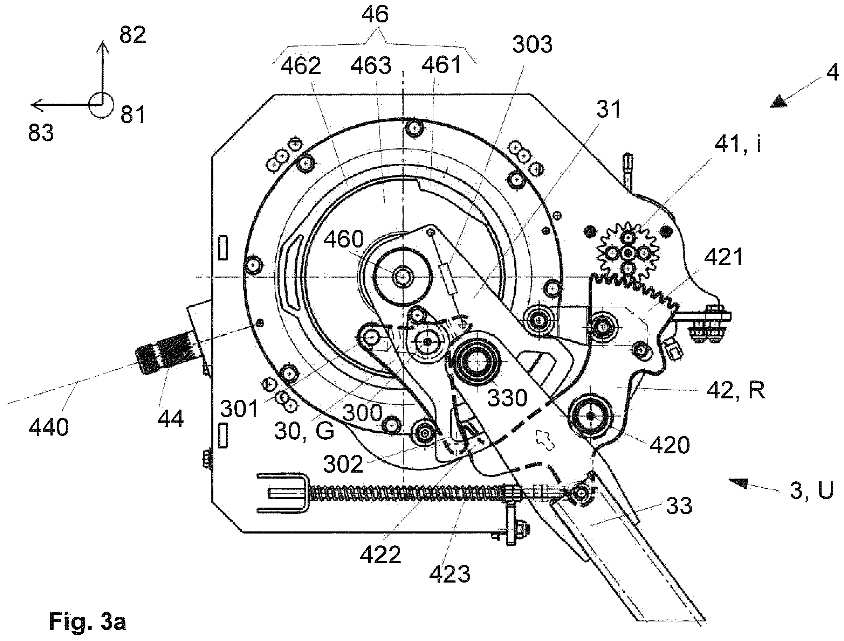

Die Schaltklinke 30 weist einen Schaltarm 301 auf, der in das Kupplungsfenster 463 hineinreicht. In der Grundposition G der Schaltklinke 30 ist der Schaltarm 301 während einer Umdrehung der Kupplungsglocke 462 außer Eingriff des Mitnehmers 461 angeordnet. Daher wird die Schaltklinke 30 in der Grundposition G nicht angetrieben, so dass die Arbeitseinheit 3 nicht angetrieben ist. Die Arbeitseinheit 3 befindet sich dann in einem ungekuppelten Zustand U. Den ungekuppelten Zustand U zeigt Fig. 3(a).

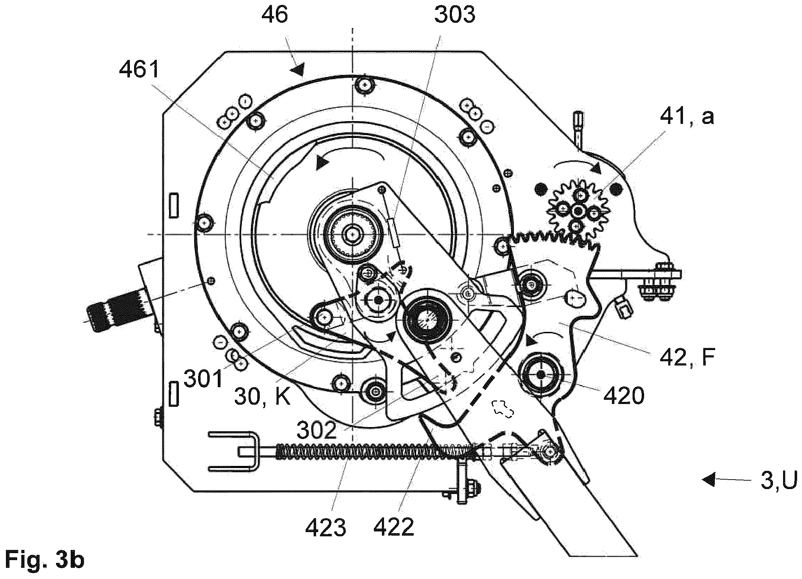

Durch Umschalten des Schaltmittels 41 vom inaktiven Zustand i in den aktiven Zustand a fällt das Haltemoment ab. Dadurch ist der Schalthebel 42 um die Schaltachse 420 drehbar und wird von der Ruheposition R mit der Kraft des Vorspannelementes 423 in eine Freigabeposition F verstellt. Dabei gibt der Anschlagarm 422 des Schalthebels 42 den Freigabearm 302 der Schaltklinke 30 frei. Dadurch dreht sich die Schaltklinke 30 mit der Kraft des Kraftmittels 303 um die Klinkenachse 300 von der Grundposition G in eine Kupplungsposition K. Dies zeigt Fig. 3 (b).

In der Kupplungsposition K ist der Schaltarm 301 so im Kupplungsfenster 463 positioniert, dass der Mitnehmer 461 während der Umdrehung der Kupplungsglocke 462 um die Kupplungsachse 460 an den Schaltarm 301 anschlägt. Die Schaltklinke 30 ist dann mit dem Mitnehmer 461 der Kupplungsvorrichtung 46 teil- formschlüssig wirkverbunden.

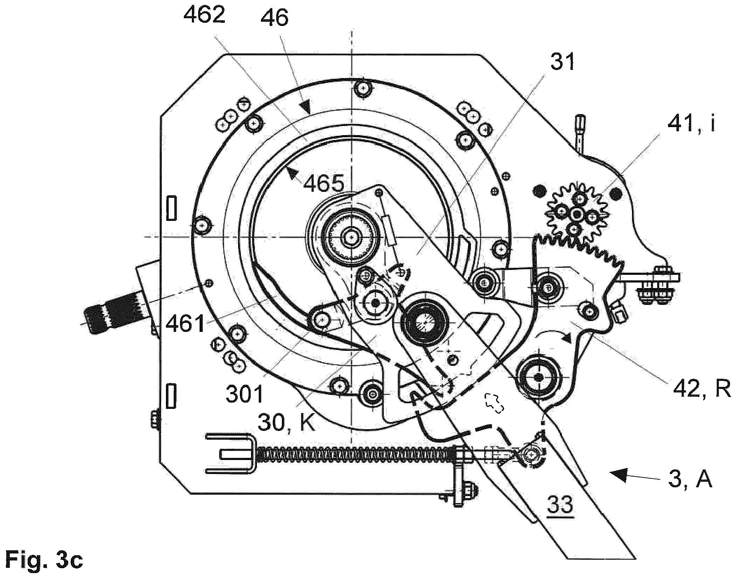

In der Kupplungsposition K der Schaltklinke 30 nimmt der Mitnehmer 461 daher die Schaltklinke 30 beim Umlauf der Kupplungsglocke 462 mit. Um Verschleiß zu vermeiden, ist am Schaltarm 301 der Schaltklinke 30 eine Rolle (nicht bezeichnet) angeordnet, die sich beim Umlauf der Kupplungsglocke 462 an einer inneren Lauffläche 465 der Kupplungsglocke 462 abrollt. Da die Schaltklinke 30 an der Kurbel 31 der Arbeitseinheit 3 befestigt ist, wird die Kurbel 31, und mir ihr die Arbeitseinheit 3, dabei angetrieben. Die Arbeitseinheit 3 befindet sich dann im angekuppelten Zustand A. Den angekuppelten Zustand A zeigt die Fig. 3 (c).

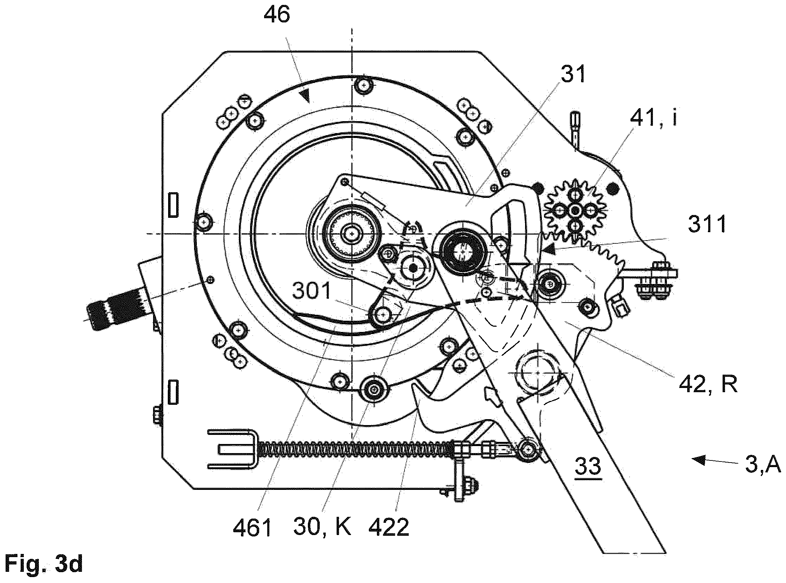

Die Kurbel 31 weist eine Außenkontur 311 auf, die beim Drehen um die Kupplungsachse 460 in Anlage an den Schalthebel 42 gerät. Mit der Außenkontur 311 der Kurbel 31 wird der Schalthebel 42 beim Drehen von der Freigabeposition F in die Ruheposition R um die Schaltachse 420 zurückgedreht. Dabei wird auch das Vorspannelement 423 zurückgestellt. Weiterhin wird dabei auch die Bremse 41 zurückgestellt. Das Zurückstellen der Bremse 41 kann sowohl im inaktiven Zustand i der Bremse 41, das heißt hier gegen ihr Haltemoment, als auch im aktiven Zustand a der Bremse 41 erfolgen. Dies zeigt Fig. 3 (d).

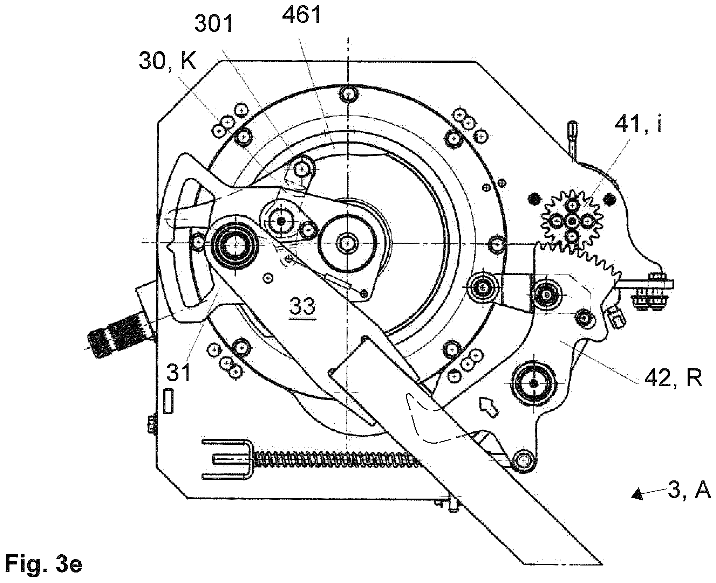

Fig. 3 (e) zeigt den Ausschnitt aus der Bindevorrichtung 5 beim Umlauf der Kurbel 31 um die Kupplungsachse 460 im inaktiven Zustand i der Bremse 41, wobei der Schalthebel 42 in die Ruheposition R zurückgestellt ist.

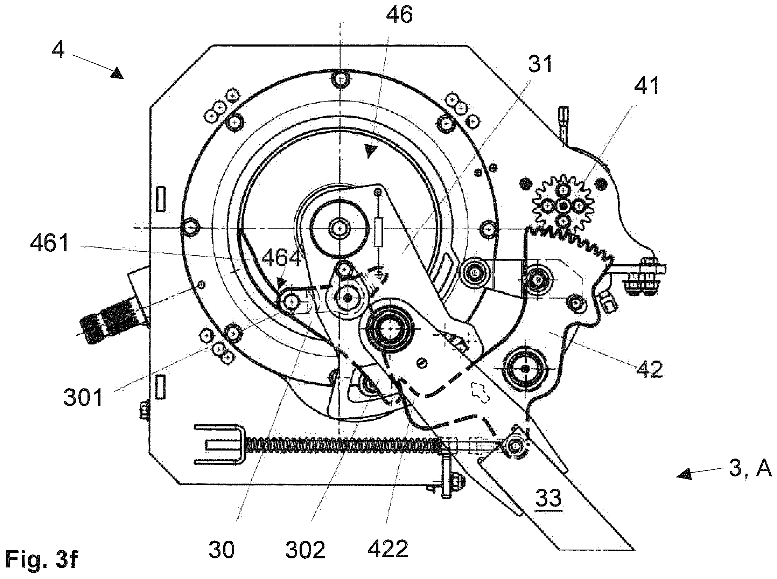

Nach einer im Wesentlichen vollen Umdrehung der Kupplungsglocke 462 trifft der Freigabearm 302 der Schaltklinke 30 auf den Anschlagarm 422 des Schalthebels 42 auf. Dies zeigt Fig. 3 (f). Die Schaltklinke 30 und der Schalthebel 42 sind so ausgelegt, dass das Haltemoment der Bremse 41 dabei nicht überwunden wird oder sich sogar vergrößert.

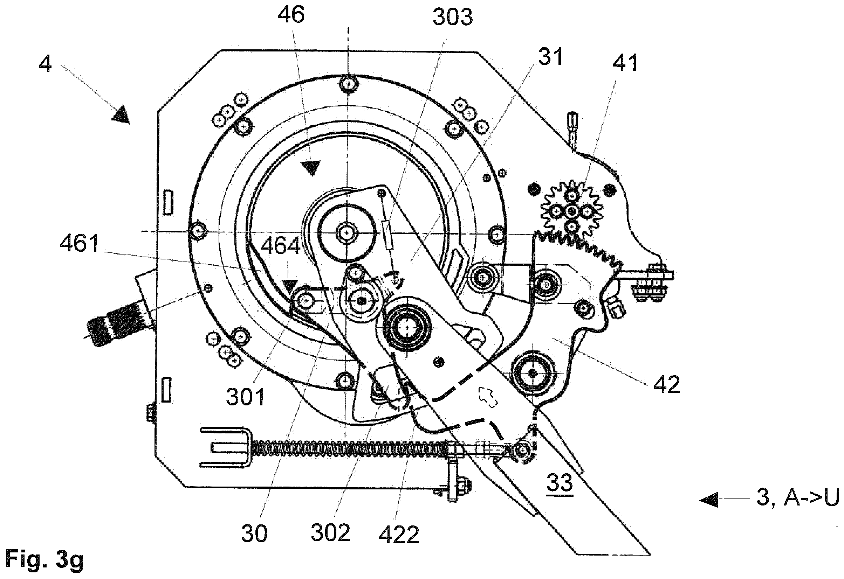

Beim weiteren Umlauf der Kupplungsglocke 462 um die Kupplungsachse 460 liegen Freigabearm 302 der Schaltklinke 30 und Anschlagarm 422 des Schalthebels 42aneinander an. Der Mitnehmer weist eine Kontur 464 auf, die so ausgelegt ist, dass sich die Rolle am Schaltarm 301 der Schaltklinke 30 am Mitnehmer 461 abrollt, so dass die Schaltklinke 30 um die Klinkenachse 300 von der Kupplungsposition K aus gegen die Kraft des Kraftmittels 303 in die Grundposition G zurückgedreht wird. Die Arbeitseinheit 3 wird dadurch von der Kupplungsvorrichtung 46 abgekuppelt. Sie befindet sich dann wieder im ungekuppelten Zustand U und wird nicht mehr angetrieben. Den Übergang vom angekuppelten Zustand A in den ungekuppelten Zustand U zeigt Fig. 3 (g).

Sobald der Sollwert für die Ballenlänge erneut erreicht oder überschritten ist, beginnt der Ablauf von vorn.

## Patentansprüche

1. Bindevorrichtung (5) für eine landwirtschaftliche Erntegutpresse (1),
• mit einer Antriebseinheit (4) zum Antreiben der Bindevorrichtung (5), und
• mit einer Arbeitseinheit (3), die von einem angekuppelten Zustand (A), in dem sie an die Antriebseinheit (4) gekuppelt ist, so dass sie angetrieben ist, in einen ungekuppelten Zustand (U) umschaltbar ist, in der sie nicht an die Antriebseinheit (4) gekuppelt ist, so dass sie nicht angetrieben ist,
wobei die Arbeitseinheit (3) eine Schaltklinke (30), und die Antriebseinheit (4) eine Kupplungsvorrichtung (46) umfassen, mit der die Arbeitseinheit (3) und die Antriebseinheit (4) wirkverbindbar sind, und wobei die Kupplungsvorrichtung (46) im angekuppelten Zustand (A) der Arbeitseinheit (3) mit der Schaltklinke (30) zusammenwirkt,
**dadurch gekennzeichnet, dass**
die Antriebseinheit (4) ein elektromagnetisch wirkendes Schaltmittel (41) aufweist, das reversibel von einem inaktiven Zustand (i) in einen aktiven Zustand (a) umschaltbar ist, und das dazu eingerichtet ist, das Wirkverbinden der Kupplungsvorrichtung (46) mit der Schaltklinke (30) auszulösen oder zu beenden.

2. Bindevorrichtung (5) nach Anspruch 1, **dadurch gekennzeichnet, dass** sie eine Steuerungseinheit (7) umfasst, die dazu eingerichtet ist, das Schaltmittel (41) in Abhängigkeit von einem Betriebswert umzuschalten.

3. Bindevorrichtung (5) nach einem der vorherigen Ansprüche, **dadurch gekennzeichnet, dass** der Betriebswert ein voreingestellter Wert, insbesondere eine voreingestellte Zeit, oder ein Messwert, insbesondere eine Ballenlänge, ist.

4. Bindevorrichtung (5) nach einem der vorherigen Ansprüche, **dadurch gekennzeichnet, dass** das Schaltmittel (41) eine elektromagnetisch betätigte Bremse, insbesondere eine Federkraftbremse, oder Kupplung ist.

5. Bindevorrichtung (5) nach einem der vorherigen Ansprüche, **dadurch gekennzeichnet, dass** das elektromagnetisch wirkende Schaltmittel (41) im inaktiven Zustand (i) unbestromt ist, und im aktiven Zustand (a) bestromt ist.

6. Bindevorrichtung (5) nach einem der vorherigen Ansprüche, **dadurch gekennzeichnet, dass** das Schaltmittel (41) dazu eingerichtet ist, mit einem Schalthebel (42) zusammenzuwirken, wobei es den Schalthebel (42) im inaktiven Zustand (i) reib- und/oder formschlüssig in einer Ruheposition (R) hält, und im aktiven Zustand (a) freigibt, so dass der Schalthebel (42) von der Ruheposition (R) in eine Freigabeposition (F) verstellbar ist.

7. Bindevorrichtung (5) nach einem der vorherigen Ansprüche, **dadurch gekennzeichnet, dass** der Schalthebel (42) mit der Kraft eines Vorspannelementes (423), insbesondere einer Feder, von der Ruheposition (R) in die Freigabeposition (F) verstellbar ist.

8. Bindevorrichtung (5) nach einem der vorherigen Ansprüche, **dadurch gekennzeichnet, dass** das Zurückstellen des Schalthebels (42) von der Freigabeposition (F) in die Ruheposition (R), insbesondere gegen die Kraft des Vorspannelementes (423), kurvenbahngesteuert erfolgt.

9. Bindevorrichtung (5) nach einem der vorherigen Ansprüche, **dadurch gekennzeichnet, dass** der Schalthebel (42) in seiner Ruheposition (R) die Schaltklinke (30) in einer Grundposition (G) hält, in der sie außer Eingriff mit der Kupplungsvorrichtung (46) ist.

10. Bindevorrichtung (5) nach einem der vorherigen Ansprüche, **dadurch gekennzeichnet, dass** der Schalthebel (42) in seiner Freigabeposition (F) die Schaltklinke (30) freigibt, so dass die Schaltklinke (30) von der Grundposition (G) in eine Kupplungsposition (K) verstellbar ist, in der sie mit der Kupplungsvorrichtung (46) wirkverbindbar oder wirkverbunden ist.

11. Bindevorrichtung (5) nach einem der vorherigen Ansprüche, **dadurch gekennzeichnet, dass** die Kupplungsvorrichtung (46) eine Kupplungsglocke (462) umfasst, die um eine Kupplungsachse (460) drehbar ist, und in der ein Mitnehmer (461) angeordnet ist, der in der Kupplungsposition (K) der Schaltklinke (30) beim Drehen der Kupplungsglocke (462) in Anlage an die Schaltklinke (30) gerät.

12. Bindevorrichtung (5) nach einem der vorherigen Ansprüche, **dadurch gekennzeichnet, dass** die Arbeitseinheit (3) eine Kurbel (31) umfasst, die drehbar um die Kupplungsachse (460) der Kupplungsvorrichtung (46) angeordnet ist, wobei die Schaltklinke (30) um eine Klinkenachse (300) drehbar an der Kurbel (31) befestigt ist, so dass sich die Kurbel (31) bei angetriebener Schaltklinke (30) um die Kupplungsachse (460) dreht.

13. Bindevorrichtung (5) nach einem der vorherigen Ansprüche, **dadurch gekennzeichnet, dass** die Arbeitseinheit (3) eine Schwinge (32) umfasst, die an der Kurbel (31) schwenkbar befestigt ist, so dass die Schwinge (32) durch Drehen der Kurbel (31) um die Kupplungsachse (460) hin und zurück verschwenkbar ist.

14. Bindevorrichtung (5) nach einem der vorherigen Ansprüche, **dadurch gekennzeichnet, dass** die Arbeitseinheit (3) eine Untergarnführung ist.

15. Landwirtschaftliche Erntegutpresse (1), insbesondere Quaderballenpresse, mit einer Bindevorrichtung (5) nach einem der vorherigen Ansprüche.
